Europäisches Patentamt

European Patent Office

Office européen des brevets

(19)

(11) **EP 0 630 772 B1**

(12) **FASCICULE DE BREVET EUROPEEN**

(45) Date de publication et mention
de la délivrance du brevet:
**27.05.1998 Bulletin 1998/22**

(51) Int. Cl.$^6$: **B60G 17/015**, B60G 17/027

(21) Numéro de dépôt: **94401405.9**

(22) Date de dépôt: **22.06.1994**

(54) **Dispositif de commande dynamique d'assiette d'un véhicule**

Vorrichtung zur dynamischen Fahrzeugneigungssteuerung

Vehicle attitude dynamic control device

(84) Etats contractants désignés:
**CH DE ES GB IT LI**

(30) Priorité: **23.06.1993 FR 9307645**

(43) Date de publication de la demande:
**28.12.1994 Bulletin 1994/52**

(73) Titulaire:
**S.A.M.M.- Société d'Applications des
Machines Motrices
F-91570 Bièvres (FR)**

(72) Inventeurs:
• **Devaud, Gérard
F-75015 Paris (FR)**
• **Valent, Christian
F-78140 Velizy (FR)**

(74) Mandataire:
**Martin, Jean-Paul et al
c/o CABINET LAVOIX
2, Place d'Estienne d'Orves
75441 Paris Cedex 09 (FR)**

(56) Documents cités:
EP-A- 0 235 695          DE-A- 3 817 540
GB-A- 2 255 056          US-A- 4 975 849

• PATENT ABSTRACTS OF JAPAN vol. 12, no. 179
(M-701) 26 Mai 1988 & JP-A-62 289 424 (TOYOTA
MOTOR) 16 Décembre 1987
• PATENT ABSTRACTS OF JAPAN vol. 10, no. 253
(M-512) 29 Août 1986 & JP-A-61 081 213
(MITSUBISHI MOTORS) 24 Avril 1986
• PATENT ABSTRACTS OF JAPAN vol. 15, no. 427
(M-1174) 30 Octobre 1991 & JP-A-03 178 822
(SUZUKI MOTOR) 2 Août 1991
• PATENT ABSTRACTS OF JAPAN vol. 12, no. 442
(M-766) 21 Novembre 1988 & JP-A-63 173 710
(MITSUBISHI MOTORS) 18 Juillet 1988
• PATENT ABSTRACTS OF JAPAN vol. 10, no. 253
(M-512) 29 Août 1986 & JP-A-61 081 212
(MITSUBISHI MOTORS) 24 Avril 1986
• PATENT ABSTRACTS OF JAPAN vol. 15, no. 28
(M-1072) 23 Janvier 1991 & JP-A-02 270 619
(MITSUBISHI ELECTRIC) 5 Novembre 1990
• PATENT ABSTRACTS OF JAPAN vol. 15, no. 89
(M-1088) 4 Mars 1991 & JP-A-02 306 812
(TOKIKO) 20 Décembre 1990

**Description**

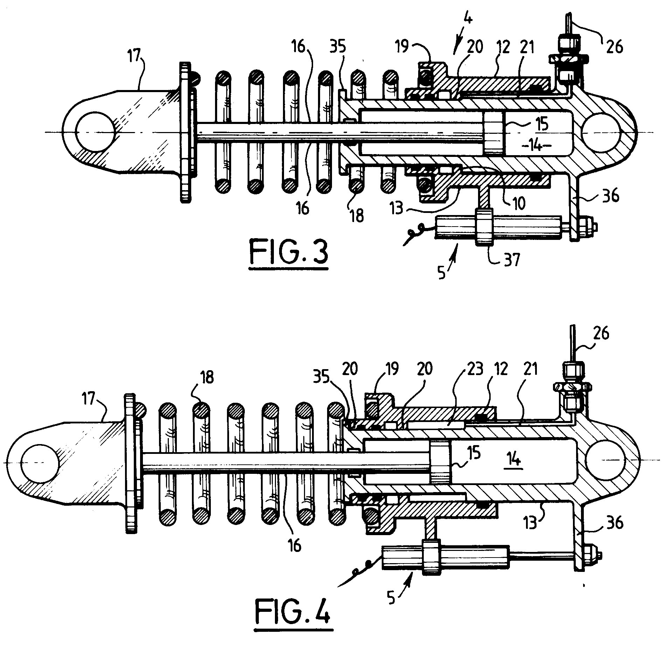

La présente invention a pour objet un dispositif de commande d'assiette d'un véhicule à quatre roues, conforme au préambule de la revendication 1. Un tel dispositif est décrit dans le document "Intelligent Suspension for Road Vehicles" - R.S. Sharp, D.A-Crolla, EAEC 1987, Fig.3.

On sait que le fonctionnement et les caractéristiques d'une suspension de véhicule sont régis par trois paramètres-clés : l'assiette, la raideur, assurée dans les systèmes mécaniques par un ressort, et l'amortissement, assuré par un amortisseur hydraulique ou par une friction.

Pour s'opposer au roulis du véhicule notamment dans les virages, la plupart des véhicules sont actuellement équipés de barres anti-roulis à raideur fixe, à raison d'une barre par essieu, liée aux ressorts de la suspension. Mais ces barres rencontrent dans certains cas des difficultés d'implantation et leur encombrement peut être gênant. De plus, dès que les efforts ne sont pas strictement symétriques sur les deux roues d'un essieu, la raideur de la barre anti-roulis raidit la suspension, ce qui constitue un autre inconvénient sensible de ce type de réalisation.

Plus récemment, on a proposé trois types de suspension, visant d'une manière générale à améliorer la tenue de route du véhicule et le confort des occupants. Ainsi un premier type de suspension dite "active" est agencé de manière à anticiper la dynamique de la liaison du véhicule avec le sol en regard du profil essentiellement aléatoire de la route, en intégrant les paramètres vitesse, rayon de braquage, charge, accélération/décélération, hauteur de caisse. A cet effet la suspension comporte une servovalve associée à un vérin hydraulique et pilotée par une électro-vanne de commande. Mais cette suspension ne comporte pas de ressort et n'assure donc pas la fonction raideur. De plus elle présente l'inconvénient de nécessiter des énergies hydraulique et électrique très importantes pour remplir la fonction raideur malgré l'absence d'un ressort, afin de permettre de restituer l'énergie emmagasinée. En effet l'énergie électrique nécessaire peut être de l'ordre de 20 à 30Kw.

La suspension dite "semi-active" a pour objet, tout en conservant les éléments existants notamment les amortisseurs, de faire varier la référence d'appui des éléments de suspension, en intégrant tout ou partie des paramètres précités. Pour des véhicules de compétition, le but premier est alors de maintenir l'effet de sol au maximum. Dans cette suspension "semi-active", le vérin est couplé à un amortisseur hydropneumatique, qui assure la fonction raideur par compression du gaz. La fonction amortisseur peut être remplie par un étranglement entre le vérin et le cylindre hydropneumatique, et permet une correction de la garde au sol.

Ce dispositif, utilisé sur certains véhicules de tourisme haut de gamme, permet de gérer le roulis et le tangage autrement qu'avec des barres à raideur fixe. Selon la dynamique requise, on peut alors considérer que l'énergie nécessaire est ramenée à environ 1/5 à 1/10 de l'énergie nécessaire pour une suspension active.

Cependant, une suspension "semi-active" ne permet pas de correction dynamique d'assiette, car on ne peut que la régler pour deux ou trois valeurs de garde au sol prédéterminées. En outre ses constantes de temps sont élevées.

Enfin un troisième type de réalisation récemment montée sur des véhicules de tourisme haut de gamme, est la suspension dite "variable", qui comporte des amortisseurs à loi d'amortissement programmée, en lieu et place des amortisseurs traditionnels. Un tel dispositif est passif, contrairement aux deux types de suspensions précitées, car la seule énergie extérieure nécessaire est celle qui fait varier les diaphragmes de l'amortisseur, sur commande d'un calculateur convenablement programmé (cette suspension pouvant être associée à des barres anti-roulis).

Mais la suspension variable n'intègre pas la fonction raideur, car le calculateur ne pilote que l'amortissement, c'est-à-dire le débit de fluide dans un étranglement. Ainsi cette suspension ne permet pas non plus de réaliser une gestion dynamique de l'assiette du véhicule, c'est-à-dire en fait de contrôler, dans les différentes situations qui se succèdent sur un trajet routier, la position de l'ensemble du véhicule par rapport au sol (hauteur de la caisse pour chaque essieu, angle de roulis de tangage...).

Il convient également de citer, au titre de l'état de la technique, les documents suivants.

Le document US-A-4 975 849 décrit un système de commande d'assiette pourvu d'une unité de commande à mémoire et calculateur, et section de commande, reliés à des vannes et capteurs.

Le document US-A-3 150 867 se rapporte à un amortisseur qui au-delà d'un certain seuil d'enfoncement, agit hydrauliquement sur la référence d'appui du ressort, relevant ainsi l'assiette de la voiture.

L'invention a pour but de réaliser un dispositif de commande dynamique de l'assiette du véhicule durant la conduite, donc notamment de son roulis et de son tangage, afin de remédier aux insuffisances des suspensions mentionnées ci-dessus, en accroissant ainsi le confort des occupants du véhicule et la tenue de route de celui-ci.

Selon l'invention, le dispositif de commande d'assiette est conforme à la partie caractérisante de la revendication 1.

Les interfaces électro-hydrauliques peuvent être par exemple soit des électrovannes , soit des servovalves.

Avantageusement, ces interfaces sont pilotées par un signal "tout ou rien", de période déterminée, modulé en largeur et fourni par le calculateur.

Un logiciel adapté permet à ce dernier de stocker en mémoire des valeurs de consigne de la position des différents vérins de chaque essieu, donc notamment de la hauteur de la caisse du véhicule au-dessus du sol. De plus le calculateur est relié à une ligne de prise en compte de chaque paramètre de la voiture durant la conduite, notamment accélération, décélération, vitesse, angle du volant, c'est-à-dire de paramètres dépendant directement du conducteur. A partir de toutes ces données, le logiciel de gestion d'assiette détermine les ordres appropriés aux interfaces électro-hydrauliques et donc aux vérins, afin de prévenir tout mouvement parasite et indésirable du véhicule par rapport aux différentes valeurs de consigne prévues pour les différents types de situations prévues (virages, vitesse maximum en ligne droite...).

D'autres particularités et avantages de l'invention apparaitront au cours de la description qui va suivre, faite en référence au dessin annexé qui en illustre une forme de réalisation à titre d'exemple non limitatif.

La figure 1 est un schéma synoptique général du dispositif de commande d'assiette de véhicule selon l'invention.

La figure 2 est une vue schématique d'une forme de réalisation concrète du dispositif de commande d'assiette selon l'invention, montrant notamment les quatre vérins, les quatre interfaces de commande associées, et le calculateur gérant l'ensemble.

La figure 3 est une vue mi-coupe longitudinale mi-élévation d'un des éléments de suspension de la Fig.2 en position basse.

La figure 4 est une vue analogue à la Fig.2 montrant l'élément de suspension en position haute.

La figure 5 est un graphique représentant le signal de commande des interfaces électrohydrauliques.

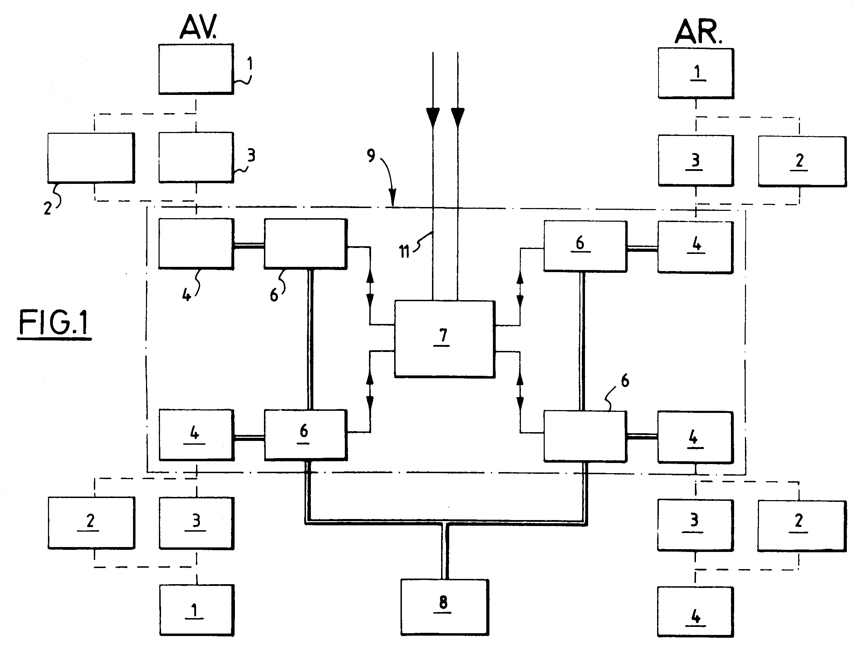

Le schéma synoptique de la Fig.1 illustre un dispositif de commande d'assiette d'un véhicule à quatre roues 1, chacune équipée d'un amortisseur 2 et d'un ressort de suspension 3.

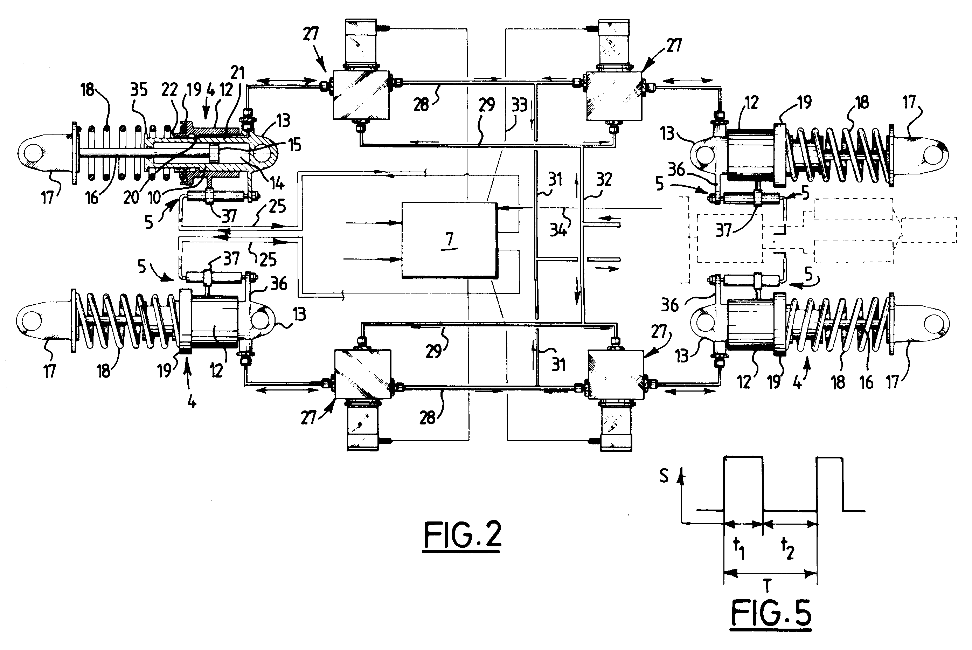

A chaque roue 1 est associé un vérin d'assiette 4 coopérant avec le ressort 3 et pourvu d'un capteur de position 5 (représenté à la Fig.2). A chaque vérin 4 est reliée une interface électro-hydraulique 6 de commande du vérin correspondant, cette interface 6 étant elle-même connectée par une liaison de commande à un calculateur central 7 de gestion dynamique de l'assiette du véhicule. Les quatre interfaces de commande 6 sont reliées deux à deux ainsi qu'à une centrale hydraulique 8 du véhicule.

Ce système d'actionnement électro-hydraulique permet d'agir entre la référence d'appui de la fonction raideur de la suspension, assurée par le ressort 3, et l'ancrage sur la caisse, la fonction d'amortissement, remplie par l'amortisseur 2 (élément passif), étant en parallèle. Pour que cette fonction satisfasse aux critères voulus, elle doit être asservie en position entre la référence seule et la position de la caisse du véhicule.

La disposition la plus avantageuse pour atteindre ce résultat consiste à utiliser pour chaque roue 1, un vérin linéaire 4 asservi en position via le calculateur 7, qui intègre l'ensemble des paramètres de la dynamique du véhicule, afin de prévenir le roulis et le tangage dans les phases accélération, freinage et virage.

La source d'énergie hydraulique constituée par la centrale 8 est extérieure au système 9 de gestion d'assiette proprement dit, entouré par un trait mixte sur la Fig.1. Elle peut être soit créée spécialement, soit prélevée sur l'installation existante du véhicule et destinée à d'autres fonctions. L'énergie nécessaire est fonction de l'amplitude que l'on veut corriger et de la dynamique propre du véhicule. Bien entendu le dispositif de commande d'assiette schématiquement représenté à la Fig.1 supprime les barres anti-roulis. Le conducteur peut selon la charge, le profil du trajet et la sensibilité qu'il désire, introduire une pondération de cette fonction au tableau de bord, relié par une ligne de commande 11 au calculateur 7 pour permettre à celui-ci de réceptionner les ordres du conducteur. Le calculateur 7 est par ailleurs bien entendu programmé par un logiciel convenable de gestion d'assiette, qui permet de prendre en compte chaque paramètre de la conduite du véhicule, notamment sa vitesse et l'angle de son volant, et à partir de ces paramètres, de commander les interfaces électro-hydrauliques 6 et consécutivement les vérins 4 dans le cadre de boucles d'asservissement de ces derniers à des courses de sortie de consigne. Ces dernières correspondent au maintien du véhicule dans des assiettes prédéterminées, corrélatives à différentes situations stockées dans la mémoire du calculateur 7.

On décrira maintenant en référence aux Fig.2 à 5 une forme de réalisation concrète du dispositif de commande de dynamique d'assiette selon l'invention.

Chaque vérin d'assiette 4 comporte un manchon 12 monté coulissant autour d'un cylindre hydraulique 13 comportant une chambre intérieure fermée 14 remplie de gaz et dans laquelle peut coulisser un piston 15 solidaire d'une tige axiale 16. Cette dernière est mécaniquement solidaire d'une chape 17 liée à la caisse (non représentée) du véhicule, et un ressort hélicoïdal de suspension 18, coaxial à la tige 16 et au cylindre 13, est interposé entre la chape 17 et l'extrémité 19 profilée en U du manchon 12. Ce dernier est en appui glissant sur la paroi extérieure du cylindre 13 par des collerettes internes 20, 22 et, du côté opposé à celles-ci, est en appui coulissant sur la paroi extérieure d'un conduit 21 d'alimentation en fluide hydraulique de l'espace annulaire 23 délimité par la collerette intérieure 20 et un épaulement 10 de la paroi du cylindre, dans lequel est ménagé le conduit 21.

Le manchon 4 est pourvu d'un capteur de position 5, alimenté par une connexion électrique 25 reliée à la batterie du véhicule. Le capteur 5 est supporté par une patte 36 du cylindre 13 et traverse de manière coulissante un étrier 37 solidaire du manchon 14. Le conduit 21 est relié par une canalisation 26 à une interface constituée dans ce mode de réalisation par une électrovanne 27, d'un type connu en soi et qui ne nécessite pas de description. Les électrovannes 27 sont reliées deux à deux par des canalisations de fluide hydraulique 28, 29, les canalisations 28 se rejoignant pour former une canalisation unique 31 de retour à la bâche, tandis que les canalisations 29 se rejoignent pour former une canalisation unique 32 d'alimentation en liquide hydraulique sous pression.

Les quatre électrovannes 27 sont également reliées par des connexions électriques 33 au calculateur 7, lui-même alimenté par la batterie via une connexion 34.

Le manchon 12 et le cylindre 13 forment le vérin d'assiette 4, et la chambre de gaz 14 ainsi que le piston 4 qui y coulisse constituent l'amortisseur.

Chaque vérin d'assiette 4 peut prendre deux positions extrêmes, représentées aux Fig.3 et 4. Dans la première position basse extrême, illustrée à la Fig.3, la collerette interne 20 vient en butée contre l'épaulement 10 et obture l'entrée de la canalisation 21, la chape 17 ainsi que la caisse du véhicule étant donc en position basse (Les vérins 4 ont été représentés horizontalement pour la commodité du dessin). Pour mettre le vérin 4 et la caisse en position haute extrême, on commande l'envoi de fluide sous pression via l'électrovanne associée 27, dans le conduit 21. La pression hydraulique exercée sur la collerette 20 écarte le manchon 12 de l'épaulement 10 et dégage la chambre annulaire 23, qui se remplit de fluide tandis que le manchon 12 poursuit sa course jusqu'à venue de sa collerette terminale 22 en butée contre un collet saillant 35 de l'extrémité du cylindre 13. Durant la course du manchon 12, le ressort 18 se comprime d'abord et soulève la chape 17 ainsi que la caisse du véhicule. La course du manchon 12 est amortie par le piston 15 coulissant dans la chambre pneumatique 14, et qui se déplace solidairement avec la chape 17. Enfin durant sa course le manchon 12 entraîne l'étrier 37 qui glisse sur le capteur 5.

Comme déjà indiqué, le logiciel de gestion d'assiette du calculateur 7 prend en compte chaque paramètre de la voiture : accélération, freinage, garde au sol de chaque roue 1, vitesse, angle du volant durant le trajet...). Chaque capteur de position 5 fournit en permanence la position du vérin correspondant 4, donc de la roue 1 par rapport à la caisse du véhicule. Cette information entre dans le calculateur 7 en même temps que les autres informations précitées, puis l'angle de la roue etc ainsi que les ordres du conducteur. En particulier, la connaissance de l'angle du volant et de la vitesse prévient le logiciel de l'événement qui va se produire, dans un délai de l'ordre de 100 millisecondes entre la rotation du volant et celle des roues 1. Le calculateur 7 met alors à profit ce temps pour donner des ordres de correction aux électrovannes 27 et par conséquent aux vérins 4, par modulation du débit de fluide dans les conduits 21 (injection de fluide ou retrait), et ce afin d'asservir la position de chaque vérin 4 et donc l'assiette, le roulis et le tangage de la caisse du véhicule aux valeurs de consigne stockées en mémoire du calculateur 7.

On réalise ainsi grâce à l'invention un système de gestion dynamique du roulis, du tangage et donc de l'assiette du véhicule, sans dégradation du confort en termes de raideur, de suspension et d'amortissement.

Chaque électrovanne 27 est pilotée par un signal S modulé en largeur (Fig.4), ayant deux largeurs différentes t1 et t2. Ce signal fournit aux vérins associés 4 un débit "entrant" q1 durant le temps t1 quand l'utilisation est reliée à la haute pression 32, et un débit "sortant" q2 durant le temps t2 (t1+t2 = T ), quand l'utilisation est reliée à la basse pression 31.

Pour une consigne constante xe, la course de sortie xs du vérin 4 est constante, et le fonctionnement est régis par la relation suivante : au cours d'une période T de fonctionnement

$$\Delta xs = q1\ t1 - q2\ t2$$

Le débit q1 est fonction, d'une part de la section de passage $\theta$ du fluide, et d'autre part de la racine carrée de la différence entre la haute pression P1 et la pression engendrée par l'effort antagoniste PA

$$q1 = K\ \theta\ \sqrt{P1-PA}$$

Le débit q2 est fonction, d'une part de la section de passage $\theta$ du fluide, et d'autre part de la racine carrée de la différence entre la pression engendrée par l'effort antagoniste Pa et la basse pression P0

$$q2 = K\theta\sqrt{Pa-P0}$$

Ces relations engendrent dans des boucles d'asservissement des positions pour chacune des roues fonction des valeurs t1, t2 (t2 = T-t1 ).

Le pilotage des électrovannes 27 par "tout ou rien", en faisant varier les temps d'admission et d'échappement de l'huile, présente des avantages importants d'une part la simplicité, et d'autre part, en cas de panne électrique d'alimentation, les électrovannes désexcitées 27 se bloquent toutes à la même position. Il en résulte que le véhicule se retrouve avec une assiette déterminée, alors qu'avec des électrovannes à commande proportionnelle, l'assiette est différentielle, car elle varie d'un vérin à l'autre.

Ces électrovannes 27 constituent donc des interfaces bi-stables, avantageusement utilisées à la place d'interfaces hydrauliques proportionnelles.

Les électrovannes 27 peuvent être remplacées par des servovalves, qui sont toutefois plus onéreuses. D'une manière générale, les interfaces électro-hydrauliques de commande peuvent être selon le type de véhicule, regroupées en un seul module. Selon une autre variante possible de réalisation, les ressorts mécaniques 18 de suspension peuvent être remplacés par des ressorts hydropneumatiques.

On donnera ci-après, à titre complémentaire, le descriptif du logiciel correspondant au système conforme à l'invention - dont la rédaction du programme source est à la portée de l'homme du métier dans le cadre de ses connaissances normales à partir de ce descriptif et de la description précédente.

ENTREES /SORTIES :

Entrées / sorties matérielles :

- capteur fournissant des informations pour le calcul de la vitesse véhicule
- 4 mesures LVDT (capteurs inductifs linéaires) donnant la hauteur à chaque roue codée sur 10 bits
- 4 commandes en PWM (modulation de largeur d'impulsion) - 20 ms de période- pour le pilotage des EVP (électrovannes pilotes) (1 par roue)

Entrées / sorties logicielles :

- 1 cartographie pour chaque roue (4 au total) de hauteur de caisse dans la même échelle que la mesure du LVDT associé, tenant compte des valeurs mini (LVDTmin) et maxi (LVDTmax) fournies par le LVDT pour la voiture en position haute et basse. Cartographie de la forme :

| vitesse | V0 | V1 | V2 | V3 | V4 | V5 | V6 |
|---------|----|----|----|----|----|----|----|
| hauteur | L0 | L1 | L2 | L3 | L4 | L5 | L6 |

- Vitesse voiture (V) dans la même échelle que les vitesses V0 à V6, cette vitesse voiture est saturée à V6 si elle est supérieure à V6.

- Gain de l'asservissement (G), commun aux 4 roues.

- Hauteur de chaque roue (4 au total) sur 10 bits (H).

- Le rapport cyclique du PWM de commande de chaque roue (PWM) (4 au total).

ALGORITHME DE CALCUL :

La description suivante s'applique pour une roue, elle est valable pour les 4 roues, chaque roue ayant ses propres entrées/sorties. Seuls la vitesse véhicule et le gain de l'asservissement sont communs aux 4 roues.

La valeur de la hauteur de la caisse est échantillonnée 4 fois (toutes les 5 ms) entre chaque calcul de hauteur de caisse (toutes les 20 ms). Une moyenne est faite sur ces 4 valeurs, cette moyenne est utilisée pour le calcul d'asservissement dans la variable H.

Pseudo-code de calcul :

- saisie de la vitesse véhicule (V)

- saisie de la hauteur de caisse (H)

- recherche des bornes Vi et Vi+1 dans la cartographie de hauteur de caisse telles que :

$$Vi \leq V \leq Vi+1$$

- calcul de la consigne hauteur de caisse par interpolation linéaire :

$$Cons = (Li+1 - Li) / (Vi+1 - Vi) * (V - Vi) + Li$$

- calcul de l'écart avec gain (G) :

$$Ecart = G * (Cons - H)$$

- calcul du rapport cyclique de la commande PWM (PWM) :

où Emax = LVDTmax - LVDTmin .

La commande effective du PWM est un signal carré dont le temps à l'état haut est de 1% de 20 ms pour 1% de cycle et de 99% de 20 ms pour 99% de cycle.

## Revendications

1. Dispositif de commande d'assiette d'un véhicule à quatre roues (1), chacune équipée d'un amortisseur (2) disposé en parallèle avec un ressort (3) de suspension, et d'un vérin d'assiette (4) coopérant en série avec ledit ressort de suspension, et pourvu d'un capteur de position (5) indiquant la position du vérin, caractérisé en ce qu'il comprend, pour chaque roue, une interface électro-hydraulique (6) de commande du vérin, reliée d'une part à ce dernier et d'autre part à une centrale hydraulique (8) du véhicule et à une source d'énergie électrique, et un calculateur (7) de gestion dynamique d'assiette, relié aux interfaces, programmé pour prendre en compte chaque paramètre de la conduite du véhicule, notamment sa vitesse et l'angle de son volant, et à partir de ces paramètres pour commander les interfaces électro-hydrauliques et consécutivement les vérins dans le cadre de boucles d'asservissement de ces derniers à des courses de sortie de consigne, correspondant au maintien du véhicule dans des assiettes prédéterminées, pour différentes situations stockées dans la mémoire du calculateur, en ce que lesdites interfaces (6) sont pilotées par un signal (S) "tout ou rien", de période déterminée (T) modulé en largeur et fourni par le calculateur (7), et en ce que chaque vérin (4) est hydraulique et à simple effet, sa course étant asservie à une consigne de position.

2. Dispositif selon la revendication 1, caractérisé en ce que les interfaces électro-hydrauliques sont des électrovannes (27).

3. Dispositif selon la revendication 1, caractérisé en ce que les interfaces électro-hydrauliques sont des servovalves.

4. Dispositif selon la revendication 1, caractérisé en ce que le ressort de suspension est hydropneumatique.

## Claims

1. Position-control device for a four-wheeled vehicle (1), each wheel being equipped with a shock-absorber (2) disposed in parallel with a suspension spring (3), and with a position jack (4) co-operating in series with said suspension spring, and provided with a position detector (5) indicating the position of the jack, characterised in that it comprises, for each wheel, and electrohydraulic control interface (6) of the jack, connected on the one hand to the latter and on the other hand to a central hydraulic system (8) of the vehicle, and to a source of electrical power, and a dynamic position-management computer (7) connected to the interfaces, programmed to take into account each parameter of the vehicle drive, particularly the speed and the angle of its steering wheel, and on the basis of the parameters to control the electrohydraulic interfaces and, consecutively, the jacks within the scope of servo loops of these latter, to reference output tracks, corresponding to maintaining the vehicle in predetermined positions, for different situations stored in the memory of the computer, in that said interfaces (6) are controlled by an "all or nothing" signal (S) of a determined period (T) modulated in width and provided by the computer (7), and in that each jack (4) is hydraulic and single-acting, its travel being subject to a reference position.

2. Device according to claim 1, characterised in that the electrohydraulic interfaces are electrovalves (27).

3. Device according to claim 1, characterised in that the electrohydraulic interfaces are servovalves.

4. Device according to claim 1, characterised in that the suspension spring is hydropneumatic.

**Patentansprüche**

1. Vorrichtung zum Steuern der Lage eines Fahrzeuges mit vier Rädern (1), von denen jedes mit einem Stoßdämpfer (2), der parallel zu einer Aufhängungsfeder (3) angeordnet ist, sowie mit einem Lagesteller (4) ausgerüstet ist, der in Reihe mit der Aufhängungsfeder zusammenwirkt, und mit einem Positionssensor (5) zum Anzeigen der Position des Stellers,
dadurch gekennzeichnet,
daß sie für jedes Rad eine elektrohydraulische Schnittstelle (6) zum Steuern des Stellers, die einerseits mit letzterem und andererseits mit einer hydraulischen Zentraleinrichtung (8) des Fahrzeugs und mit einer elektrischen Energiequelle verbunden ist, sowie eine Recheneinrichtung (7) zur dynamischen Steuerung der Lage aufweist, die mit den Schnittstellen verbunden ist und die derart programmiert ist, daß sie beim Rechnen einen jeweiligen Parameter der Fahrt des Fahrzeugs erfaßt, insbesondere seine Geschwindigkeit und seinen Lenkwinkel, und, ausgehend von diesen Parametern, die elektrohydraulischen Schnittstellen und dementsprechend die Steiler im Rahmen der Regelschleifen der letzteren zum Ausgeben eines Stellwerts, entsprechend der Aufrechterhaltung des Fahrzeuges in vorbestimmten Lagen für verschiedene Situationen steuert, die im Speicher der Recheneinrichtung gespeichert sind, und daß die Schnittstellen (6) durch ein Signal (S) "Alles oder Nichts" gesteuert sind, welches eine vorbestimmte Periode (T) aufweist und das in seiner Größe modulierbar ist und von der Recheneinrichtung (7) bereitgestellt wird, und daß jeder Steller (4) hydraulisch und von einfacher Wirkung ist, wobei sein Lauf von einem Positionsstellwert stellbar ist.

2. Vorrichtung nach Anspruch 1,
dadurch gekennzeichnet,
daß die elektrohydraulischen Schnittstellen Elektroventile (27) sind.

3. Vorrichtung nach Anspruch 1,
dadurch gekennzeichnet,
daß die elektrohydraulischen Schnittstellen Servoventile sind.

4. Vorrichtung nach Anspruch 1,
dadurch gekennzeichnet,
daß die Aufhängungsfeder hydropneumatisch ist.

FIG.1

FIG.2

FIG.5

FIG.3

FIG.4